# EUROPEAN PATENT APPLICATION

(11) **EP 3 015 680 A1**
(43) Date of publication of application: **04.05.2016**
(21) Application number: 14190479.7
(22) Date of filing: 27.10.2014
(51) Int. Cl.: F02C 3/28, F02C 7/08, B01D 53/22

(54) **Method for operating a gas turbine engine unit**

(71) Applicant: Siemens Aktiengesellschaft, 80333 München (DE)
(72) Inventor: Lindman, Olle, 61237 Finspang (SE); Sjödin, Mats, 612 33 Finspong (SE)

(57) **Abstract**

The present invention relates to a method for operating a gas turbine engine unit (10) comprising a gas turbine engine (12, 12a, 12b, 12c) with at least a compressor section (14) and a turbine section (16), wherein the compressor section (14) and the turbine section (16) are operable by a working fluid (18, 20), and further comprising a unit (22) for an oxygen extraction process, wherein the method comprises the steps of: Discharging a total amount of O₂-rich working fluid (18) from a compressor (24) of the compressor section (14) to the unit (22) for the oxygen extraction process and extracting O₂ from the O₂-rich working fluid (18) by an oxygen extraction process.

## Description

### Field of the Invention

The present invention relates to a method for operating a gas turbine engine unit comprising a gas turbine engine with at least a compressor section and a turbine section, wherein the compressor section and the turbine section are operable by a working fluid, and further comprising a unit for an oxygen extraction process. The present invention further relates to a gas turbine engine unit embodied to perform the inventive method.

### Background to the Invention

In a gas turbine engine a working fluid being compressed by a compressor enters a burner section where combustion of a mixture of the working fluid and a fuel occurs. The resulting combustion gas drives a turbine through the expansion and deflection of the gas through the turbine of the gas turbine engine. The turbine work or a part thereof, is transferred to the compressor through an interconnecting shaft. A combustion process with a complete burnout with low CO, NOₓ and unburnt hydrocarbons emissions is essential. Burners of the gas turbine engine are specifically constructed to perform such a combustion process. The working fluid entering the gas turbine engine has basically atmospheric oxygen (O₂) content of about 21% O₂. Hence, this amount of oxygen is present during the combustion process in the burner section and the burners are adapted to perform combustion with a working fluid comprising about 20% of oxygen. Since the burners can compensate slight variances of this oxygen content it is known to extract a small amount of working fluid beforehand of the combustion process to use it for an oxygen extraction process, wherein the O₂ depleted working fluid is re-transferred to the burner section of the gas turbine engine for combustion. Currently only small amounts of the total working fluid can be separated for the oxygen extraction without affecting the combustion performance of the gas turbine negatively. Moreover, large scale air separation for oxygen production is currently performed by cryogenic processes which have high costs, large footprints and consume a high amount of electrical power.

It is a first objective of the present invention to provide a method for operating a gas turbine engine unit resulting in a high amount of oxygen extraction in combination with a high efficient low emission combustion performance.

It is a further objective of the present invention to provide a gas turbine engine unit that can extract a high amount of oxygen combined with performing a high efficient low emission combustion.

These objectives may be solved by a method and a gas turbine engine unit according to the subject-matter of the independent claims.

### Summary of the Invention

Accordingly, the present invention provides a method for operating a gas turbine engine unit comprising a gas turbine engine with at least a compressor section and a turbine section, wherein the compressor section and the turbine section are operable by a working fluid, and further comprising a unit for an oxygen extraction process.

It is proposed that the method comprises the steps of: Discharging a total amount of O₂-rich working fluid from a compressor of the compressor section to the unit for the oxygen extraction process and extracting O₂ from the O₂-rich working fluid by an oxygen extraction process.

Due to this, a high amount of oxygen can be produced and a high over all plant efficiency can be gained. Furthermore, a working fluid with a high enough O₂ contend can be constructively easily used, especially, since a conventional turbine engine comprises a compressor section providing O₂-rich working fluid. Hence, the O₂-rich working fluid is compressed. Moreover, as a further result of the inventive method energy needed for the oxygen extraction process is gained from a fuel input instead of from power generation, like it is known from the state of the art cryogenic process. This is saving further costs. Thus, the proposed concept is extremely advantageous in terms of oxygen production and thermal efficiency compared to existing processes.

Even if the terms "compressor, combustion chamber, turbine, wall, bypass, outlet, return channel, inlet, sealing member, outer wall, inner wall, passage, casing, cavity, burner and membrane" are used in the singular or in a specific numeral form in the claims and the specification the scope of the patent (application) should not be restricted to the singular or the specific numeral form. It should also lie in the scope of the invention to have more than one or a plurality of the above mentioned structure(s).

A gas turbine engine unit is intended to mean a unit with at least a gas turbine engine and a unit for an oxygen extraction process. Further appliances, parts, assemblies or units may be also provided. In this context the gas turbine engine is the whole plant, with at least a compressor section and a turbine section. Furthermore and preferably, the gas turbine engine may also comprise a burner/combustion section. A unit for an oxygen extraction process may be any device or assembly adapted to perform an extraction or separation of oxygen. Especially, the extraction unit is an external unit from the gas turbine engine. It operates or functions with exception of the supplied working fluid independently from the gas turbine engine. A working fluid may be any medium or fluid feasible for a person skilled in the art containing oxygen and preferably a gaseous working fluid, like air. "O2 rich" should be understood as with an oxygen content of about 18% to 30% and preferably as with an oxygen content close to atmospheric or of approximately 20% to 21%.

Advantageously, the gas turbine engine further comprises a combustion section with at least a combustion chamber. Furthermore, it is advantageous when the method further comprises the step of: Feeding to the at least one combustion chamber of the combustion section an O₂-lean working fluid resulting from the oxygen extraction process. Thus, the working fluid can advantageously be cycled back to be used in the further process steps of the turbine engine. This reduces a need to freshly supply an equal amount of working fluid as that being withdrawn from the compressor section. In this context an "O₂-lean" should be understood as with an oxygen content lower than the compressor feed stream or of about 10% to 16% or even less. Hence, the oxygen extraction process can extract up to 20% O₂-content and normally at least about 10% O₂-content. Generally, the extracted amount depends on the operating mode and what will be possible due to the process and the specifications of a used combustion system. The wording "resulting from the oxygen extraction process" should be understood as "processed by the oxygen extraction process". A pressure level in the system especially before and after the oxygen extraction depends strongly on load, ambient conditions and the oxygen extraction process. An example for 100% load and 15°C ambient air temperature would be 20.2 bar(a) pressure before O₂ separation and 19.95 bar(a) after O₂ separation.

Preferably, the method further comprises the step of: Burning an O₂-lean working fluid resulting from the oxygen extraction process in the at least one combustion chamber of the combustion section. This further reduces the need of additionally feed working fluid.

In an especially beneficial embodiment of the invention it is provided, that the method further comprises the step of: Expanding the burnt O₂-lean working fluid through a turbine of the turbine section for producing electricity. Hence, the height of the invention is to gain a power production instead of power consumption while producing oxygen.

Thus, the method is realised by using a cycling path/arrangement that is adapted to supply a compressed O₂-rich working fluid exiting the compressor section to an external unit for an oxygen extraction process and back feeding the O₂-lean working fluid to the turbine engine or the combustion chamber of the combustion section, respectively, to be burnt therein. The advantage of this concept is to use all gas turbine engine compressor working fluid for the oxygen process enabling high oxygen production. Furthermore, leading the processed working fluid back into the gas turbine engine advantageously enables the full performance of the gas turbine engine cycle.

In a preferred embodiment of the invention the method further comprises the step of: Cooling at least one wall of the combustor chamber of the combustor section by the O₂-rich working fluid or by the O₂-lean working fluid while bypassing the combustion chamber. Due to this, the combustion temperature can be advantageously reduced avoiding to high amounts of harmful combustion products like NOₓ. The cooling occurs before or after the O₂ extraction process depending on the construction of combustion section of the gas turbine engine. It is very important to use the working fluid for cooling before the combustion to gain a good combustion. In case of a parallel cooling where cooling air enters through a combustor wall by film cooling, effusion cooling or similar, the process air would be lower and the flame temperature would be higher resulting in the production of more NOₓ. The use of the O₂-rich working fluid as cooling medium is of high importance when integrating the gas turbine engine or its burner section, respectively, in the oxygen extraction process and especially when a gas turbine engine with modern performance data and high turbine inlet temperature is used. This cooling concept uses a serial cooled combustor, which is advantageous for complete burnout compared for example to parallel cooling where cold air enters through the wall creating a cold air layer.

Moreover, the method further comprises the step of: Heating the O₂-rich working fluid or the O₂-lean working fluid while bypassing the at least one combustion chamber. Hence, the radiated heat of the combustion chamber can be efficiently used to provide a temperature rise of the O₂-rich working fluid, wherein the temperature rise is e.g. essential for the subsequent oxygen extraction process. This reduces the costs of the oxygen production and hence reduces the total price of obtained oxygen. Furthermore, space, pieces and costs of the gas turbine engine unit can be advantageously saved. The term "while bypassing" should be understood as "by bypassing", "while passing by" or "while travelling along a passage adjacent to" here, the combustion chamber. Especially, the working fluid does not enter the combustion chamber and is not heated or burned in the combustion chamber.

The present invention further relates to a gas turbine engine unit comprising a gas turbine engine with at least a compressor section and a turbine section, wherein the compressor section and the turbine section are operable by a working fluid and at least one bypass, and further comprising a unit for an oxygen extraction process.

It is proposed that the bypass is embodied in such a way to discharge a total amount of O₂-rich working fluid from a compressor of the compressor section to the unit for the oxygen extraction process and wherein the unit for the oxygen extraction process is embodied in such a way to extract O₂ from the O₂-rich working fluid. In other words, a total or whole amount of O₂-rich working fluid travels the bypass to be discharged from the gas turbine engine before the O₂-rich working fluid is supplied to an extraction of O₂ from the O₂-rich working fluid by an oxygen extraction process.

Due to this, a high amount of oxygen can be produced and a high over all plant efficiency can be gained. Furthermore, a working fluid with a high enough O₂ contend can be constructively easily used, especially, since a conventional turbine engine comprises a compressor section providing O₂-rich working fluid. Hence, the O₂-rich working fluid is compressed. Moreover, as a further result energy needed for the oxygen extraction process is gained from a fuel input instead of from power generation, like it is known from the state of the art cryogenic process This is saving further costs. Thus, the proposed concept is extremely advantageous in terms of oxygen production and thermal efficiency compared to existing processes.

According to a preferred refinement, the bypass extends from an outlet of a compressor section of the gas turbine engine to an outlet of the combustion section. Due to this a direct passage for the working fluid can be provided. Further, this provides enough interaction area to heat the O₂-rich working fluid and to cool the wall of the combustion chamber. An "outlet" should be also understood as an "exit". Furthermore, the outlet from the compressor section is also an inlet into the combustion section, thus it is the connection area/region of both section.

It is furthermore provided that an outlet of the combustion section connects the combustion section to the unit for the oxygen extraction process. Hence, easy access for the O₂-rich working fluid to the extraction unit can be provided. The oxygen extraction unit may be in flow direction of the working fluid connected to the combustion section or its outlet, respectively, directly or via a connecting means like a duct or a channel.

A supply of the O₂-lean working fluid can be provided constructively easy when the gas turbine engine unit comprises a return channel extending from the unit for the oxygen extraction process to an inlet of the combustion chamber of the combustion section. The return channel extends preferably along a part of the combustion section before ending at the inlet of the combustion chamber. The O₂-lean working fluid is led through the return channel to be burnt in the combustion chamber.

In a further realisation of the invention the combustion section comprises at least one sealing member separating the bypass and the return channel from each other. Thus, a mixing of the O₂-rich working fluid and the O₂-lean working fluid can be easily prevented. The sealing member may be any device feasible for a person skilled in the art, like a partitioning wall, or the like. Preferably, the at least one sealing member is at least one wall of a combustor chamber of the combustor section that separates the O₂-rich working fluid and the O₂-lean working fluid. The construction has no direct flow connection between the compressor section and the turbine section besides the path via the bypass, the unit for the oxygen separation, the return channel and the combustion chamber.

Advantageously, the combustion chamber comprises an outer wall, an inner wall and a passage arranged between the outer wall and the inner wall, and wherein the O₂-rich working fluid travels along the passage after entering the combustion section from the unit for the oxygen extraction process. According to this construction the O₂-rich working fluid travels along a structure already existent in state of the art systems. Thus, mounting space and costs can be saved. Furthermore, the passage is a part of the return channel. The outer and the inner walls may be embodied as an inner and an outer liner of the combustor.

Alternatively, an O₂-lean working fluid travels along the passage before exiting the combustion section through an outlet of the combustion section. Also in this construction state of the art structures can be used resulting in reduced mounting space and costs. Moreover, the passage is a part of the bypass.

Moreover, the combustion section comprises a casing and/or wherein the casing is provided with at least an outlet and at least an inlet to connect the combustion section with the unit for the oxygen extraction process. Hence, the connection between the gas turbine engine and the unit for oxygen extraction can be constructively easy realised. The at least one outlet and the at least one inlet are manifolds to connect the combustion section and the unit for oxygen extraction. The at least one outlet and/or the at least one inlet may be embodied as flanged holes.

Due to a further aspect of the invention the combustion section is an inline combustion section arranged axially between at least the compressor section and the turbine section of the gas turbine engine. Thus, a construction of a conventional gas turbine engine with a reconstructed housing/casing of the combustion section embodied with manifolds for the oxygen extraction unit can be used in the inventive gas turbine engine unit. The compressor section is oriented basically along a flow direction of the working fluid.

Besides the axial or inline arrangement of the combustion section other arrangements of the combustion section are known. For example, it is known to arrange the combustion section in a non-inline configuration or perpendicularly arranged to an axis of the engine or as a so called single top mounted silo combustor as it is known e.g. from the Siemens SGT-2000E.

Alternatively and preferably, the combustion section comprises at least one single top mounted silo combustor, especially arranged basically perpendicular to an axis of the gas turbine engine. Due to this construction it is avoided that the cooling medium for blades and vanes will pass the components, like a membrane, of the oxygen extraction unit. Further, a burner of the combustion chamber can have a higher residence time which results in better burnout and minimizes amounts of CO and unburnt hydrocarbons emissions. The flow direction of the working fluid in the combustion section is different as that in the compressor section and the turbine section, namely, they are basically perpendicular towards each other. In this context "basically perpendicular" means that the orientation of the combustor may deviate up to 30° from a strict perpendicular orientation.

A load and thermal symmetry for the gas turbine engine compared to the one silo embodiment can be provided when two basically symmetrically arranged side mounted silo combustors are provided. According to a feasible construction these would be mounted at opposes sides of the gas turbine engine.

According to a further realisation of the invention the combustion section and/or the single top or side mounted silo combustor comprises a first cavity and at least a second cavity, wherein the first cavity is the combustion chamber and the at least second cavity extends in at least one direction, preferably a circumferential direction, all around an outer contour, preferably a circumference, of the first cavity to build the bypass for discharging the O₂-rich working fluid. Thus, the O₂-rich working fluid can flow freely around the combustion chamber to be led directly to the unit for oxygen production and to be heated and at the same time cool the wall of the combustion chamber. Preferably, the bypass is a basically circular passage, wherein "basically circular" is intended to mean that the bypass has a circular shape or a circular-like shape, like oval or egg-shaped.

Advantageously, the combustion section comprises at least one burner that is selected for combustion of an O₂-lean working fluid. Hence, an efficient combustion process is achieved. The burner may be any burner feasible for a person skilled in the art, like a known standard lean premixed burner. Such a burner has millions of operating hours experience and compared to other state of the art burners it is a robust and simple burner with just two gas fuel lines, a pilot and a main flame. Possibly, the burner might be modified adjusted or e.g. by stabilizing a pilot fuel split. Preferably, the combustion of the burner should have low NOₓ emission and a stable operation.

Generally, low oxygen content in the combustion working fluid slows down the combustion process increasing the risk for not complete burnout and high CO and unburnt hydrocarbons emissions. A long residence time is very important to achieve good burn out. According to an preferred embodiment of the invention the at least one burner or specifically a combustor volume has a residence time that is between 20 milliseconds (ms) and 200 ms. For these times it had been shown that a complete combustion can be achieved even with low O₂ content in the working fluid. A combustion volume means the whole volume of the combustor and of the transition. These volumes combined result in the residence time.

In a further aspect of the invention it is proposed that the unit for the oxygen extraction process comprises at least one ion transport membrane to perform the oxygen extraction process. This method has been shown to be easier to handle as existing cryogenic processes. Moreover, it may be a compact and space saving arrangement. Compared to existing cryogenic methods such an extraction is much more energy efficient. The ion membrane(s) together with the gas turbine engine produces electricity whereas the cryogenic method consumes electricity. Preferably, the extraction unit comprises a plurality of ion transport membranes e.g. stacked to separate oxygen.

The above-described characteristics, features and advantages of this invention and the manner in which they are achieved are clear and clearly understood in connection with the following description of exemplary embodiments which are explained in connection with the drawings.

### Brief Description of the Drawings

The present invention will be described with reference to drawings in which:
- FIG 1:: shows a schematically and sectional view of a part of a gas turbine engine unit with an upper half of a gas turbine engine and a unit for an oxygen extraction process,
- FIG 2:: shows in a sectional view an alternatively embodied silo combustor of a gas turbine engine,
- FIG 3:: shows in a schematically top view the gas turbine engine from FIG 2,
- FIG 4:: shows a schematically and sectional view of an alternative gas turbine engine useable with the unit for an oxygen extraction process from FIG 1 and
- FIG 5:: shows a schematically and sectional view of a further alternative gas turbine engine useable with the unit for an oxygen extraction process from FIG 1.

### Detailed Description of the Illustrated Embodiments

The terms upstream and downstream refer to the flow direction of the airflow and/or working gas flow through the gas turbine engine 12 unless otherwise stated. If used and not otherwise specified, the terms axial, radial and circumferential are made with reference to a rotational axis 52 of the gas turbine engine 12.

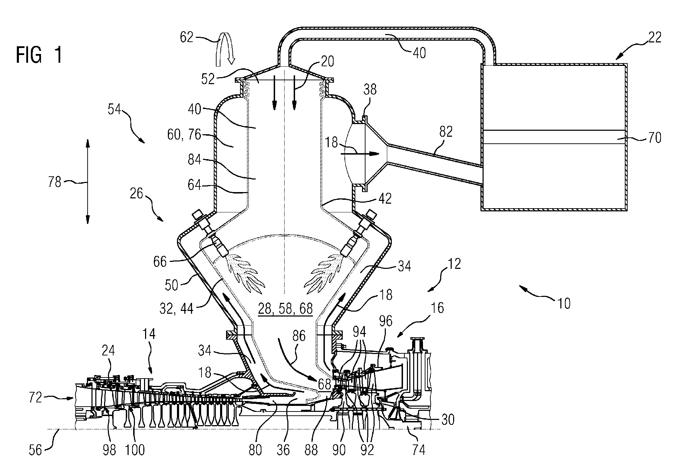

FIG 1 shows an example of a gas turbine engine unit 10 with a gas turbine engine 12 and a unit 22 for an oxygen extraction process in a sectional view. The gas turbine engine 12 comprises, in flow series of a working fluid 18, 20, an air inlet 72 (not shown in detail) and a compressor section 14 with a compressor 24, a combustion section 26 and a turbine section 16 with a turbine 30, which are generally arranged in flow series and except for the combustion section 26 generally in the direction of a longitudinal or rotational axis 56. The gas turbine engine 12 further comprises a shaft 74 which is rotatable about the rotational axis 56 and which extends longitudinally through the gas turbine engine 12. The shaft 74 drivingly connects the turbine section 16 to the compressor section 14.

In operation of the gas turbine engine 12, air, which is taken in through the air inlet 72 is compressed by the compressor section 14 and delivered to the combustion section or burner section 26. The compressed air passing through the compressor section 14 is an O₂-rich working fluid 18 with about 21% O₂ content. The combustion section 26 comprises one or more second cavities 60 each embodied as a burner plenum 76, one or more first cavities 58, each embodied as a combustion chamber 28 with a wall 32 encasing the combustion chamber 28 and exemplarily at least two burners 66 fixed to the combustion chamber 28. The second cavity 60 or the burner plenum 76, respectively, extends in circumferential direction 62 of the combustion section 26 all around an outer contour 64 or circumference of the first cavity 58 or the combustion chamber 28, respectively, to build a bypass 34 for the O₂-rich working fluid 18 (see below). Thus, the combustion chamber 28 with the burners 66 is located inside one burner plenum 76.

The combustion section 26 or the burner plenum 76 comprises a casing 50 surrounding the bypass 34 and thus the combustion chamber 28. This arrangement forms or is a so called single top mounted silo combustor 54 that is arranged basically perpendicular to the axis 56 of the gas turbine engine 12. Thus, the O₂-rich working fluid 18 travels along a direction oriented basically perpendicular to the axis 56 or in radial direction 78 and there is a major change in the flow direction of the working fluid 18.

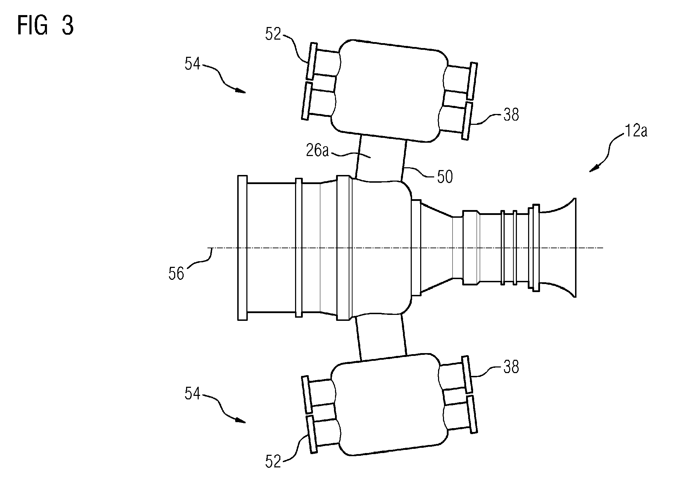

As can be seen in FIG 3, which shows schematically a top view of an alternatively embodied gas turbine engine 12a (see below) of which the arrangement of the combustors 54 can be applied to the gas turbine engine 12 of FIG 1, the gas turbine engine 12 comprises two silo combustors 54 embodied as side mounted silo combustors 54 and arranged symmetrically in respect to the axis 56. Moreover, the two side mounted silo combustors 54 are oriented slightly offset from a strictly perpendicular orientation in respect to the axis 56 as well as with a contrariwise bending in respect to each other and the axis 56.

After traveling the compressor section 14 the O₂-rich working fluid 18 enters a diffuser 80 of the compressor section 14 and is discharged from the diffuser 80 through an outlet 36 into the burner plenum 76 or the bypass 34, respectively. The bypass 34 extends from the outlet 36 of a compressor section 14 to an outlet 38 of the combustion section 26 arranged in its casing 50. The outlet 38 is for example embodied as a flanged hole. As can be seen in FIG 3 each combustion section 26 or combustor 54 or the casing 50 may also have two outlets 38 each.

The O₂-rich working fluid 18 discharged from the diffuser outlet 36 flows in radial direction 78 and in circumferential direction 62 along the bypass 34 to the outlet 38 of the combustion section 26. The O₂-rich working fluid 18 is heated while bypassing the combustion chamber 28, hence the bypass 34 is embodied in such a way to heat the O₂-rich working fluid 18 that bypasses the combustion chamber 28. Simultaneously to the heating, the O₂-rich working fluid 18 cools the wall 32 of the combustion chamber 28 while bypassing the latter and thus the overall temperature in the combustion chamber 28.

The heated O₂-rich working fluid 18 exits the outlet 38 of the combustion section 26 and flows along a channel 82 connecting the gas turbine engine 12 or the combustion section 26 with the unit 22 for the oxygen extraction process. Thus, the bypass 34 is embodied in such a way to discharge a total amount of O₂-rich working fluid 18 from the compressor 24 of the compressor section 14 to the unit 22 for the oxygen extraction process. The unit 22 for the oxygen extraction process is embodied in such a way to extract O₂ from the heated O₂-rich working fluid 18. Therefore, the extraction unit 22 comprises an ion transport membrane 70 and in this exemplary embodiment a stag of ion transport membranes 70 (not shown in detail) to perform the oxygen extraction process.

After the oxygen is extracted the now O₂-lean working fluid 20 has an O₂ content of approximately 10% to 16%. The gas turbine engine unit 10 comprises a return channel 40 connecting the extraction unit 22 and the gas turbine engine 12 and extending from the extraction unit 22 to an inlet 42 of the combustion chamber 28. The return channel 40 extends into an upper section 84 of the combustion chamber 28 while passing through an inlet 52 of the combustion section 26 located in its casing 50. The inlet 52 is for example embodied as a flanged hole. Hence, after the extraction process the O₂-lean working fluid 20 flows back to the gas turbine engine 12 travelling the return channel 40 to enter the combustion chamber 28 through the inlet 42.

To separate the O₂-rich working fluid 18 traveling the bypass 34 and the O₂-lean working fluid 20 travelling the return channel 40 the combustion section 26 comprises a sealing member 44, like a sealing membrane, separating the bypass 34 and the return channel 40 from each other. The sealing member 44 is embodied by the wall 32 of the combustion chamber 28.

The O₂-lean working fluid 20 entering the combustion chamber 28 or the burners 66, respectively, is mixed with a gaseous or liquid fuel. The air/fuel mixture is then burned and a resulting combustion gas 86 or working gas from the combustion is channelled via a transition duct 88 to the downstream turbine section 16.

The turbine section 16 comprises a number of blade carrying discs 90 attached to the shaft 74. In the present example, the turbine section 16 comprises two discs 90 each carry an annular array of turbine blades 92. However, the number of blade carrying discs 90 could be different, i.e. only one disc 90 or more than two discs 90. In addition, guiding vanes 94, which are fixed to a stator 96 of the gas turbine engine 12, are disposed between the turbine blades 92. Between the exit of the combustion chamber 28 and the leading turbine blades 92 inlet guiding vanes 94 are provided.

The combustion gas 86 from the combustion chamber 28 enters the turbine section 16 and drives the turbine blades 92 which in turn rotate the shaft 74. The guiding vanes 94 serve to optimise the angle of the combustion or working gas or fluid 86 on to the turbine blades 92. The compressor section 14 comprises an axial series of guide vane stages 98 and rotor blade stages 100.

The method for operating the gas turbine engine unit 10 comprises the following steps:
The O₂-rich working fluid 18 is provided by the compressor 24 of the compressor section 14 and let through an outlet 36 of the compressor section 14 to the bypass 34. There the O₂-rich working fluid 18 is heated while bypassing the combustion chamber 28. Simultaneously, the wall 32 of the combustion chamber 28 is cooled by the O₂-rich working fluid 18 while bypassing. The bypass 34 discharges the total amount of O₂-rich working fluid 18 from the compressor 24 of the compressor section 14 to the unit 22 for the oxygen extraction process. After leading the now heated O₂-rich working fluid 18 via the outlet 38 of the combustion section 26 and the channel 82 to the unit 22 for the oxygen extraction process O₂ is extracted from the heated O₂-rich working fluid 18 by the ion transport membrane 70 of the extraction unit 22. Subsequently, the now O₂-lean working fluid 20 is feed via the return channel 40 back to the combustion chamber 28 to be burnt with added fuel by the burners 66. The combustion volume 68, in other words, the combustion chamber 28 together with the transition duct 88 would have a residence time that is between 20 milliseconds (ms) and 200 ms.

For the burning of the O₂-lean working fluid 20 the burner 66 is specifically selected and/or modified for combustion of the O₂-lean working fluid 20. The burner 64 may for example be a lean premix type burner.

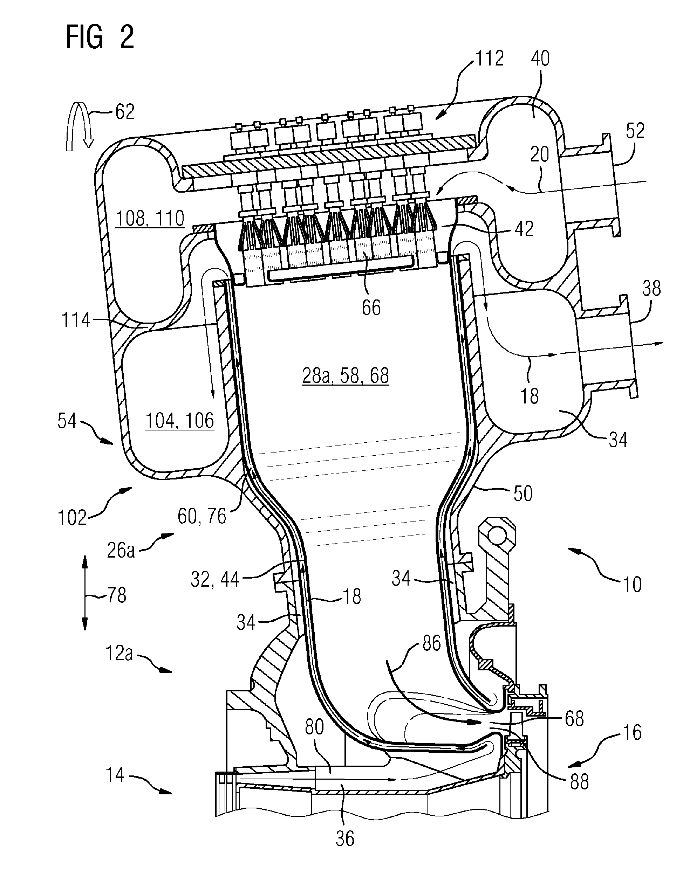

In FIG 2 to 5 three alternative embodiments of the combustion section 26 of the gas turbine engine 12 of the gas turbine engine unit 10 are shown. Components, features and functions that remain identical are in principle substantially denoted by the same reference characters. To distinguish between the embodiments, however, the letter "a" to "c" has been added to the different reference characters of the embodiment in FIG 2 to 5. The following description is confined substantially to the differences from the embodiment in FIG 1, wherein with regard to components, features and functions that remain identical reference may be made to the description of the embodiment in FIG 1.

The embodiment from FIG 2 differs from the embodiment of FIG 1 in the construction of the silo combustor 54a. An O₂-rich working fluid 18 discharged via an outlet 36 of a compressor section 14 travels a bypass 34 arranged basically in parallel to a wall 28 of a combustion chamber 28a of a combustion section 26a. A radial end 102 of the combustor 54a comprises as an end section 104 of the bypass 34 a basically circular duct 106 extending in circumferential direction 62 around the combustion chamber 28a. The O₂-rich working fluid 18 exits the circular duct 106 and thus the bypass 34 and the combustion section 26a via outlet 38 arranged in a casing 50 of the combustion section 26a and embodied as a flanged hole. After exiting the bypass 34 through outlet 38 the heated O₂-rich working fluid 18 travels a channel leading to the unit for oxygen extraction. The bypass 34 discharges the total amount of O₂-rich working fluid 18 from the compressor 24 of the compressor section 14 to the unit for the oxygen extraction process. There O₂ is extracted exemplarily by an ion transport membrane (not shown).

After the oxygen extraction the now O₂-lean working fluid 20 is led back to the combustion section 26a via a return channel 40 extending from the extraction unit to an inlet 42 of the combustion chamber 28a. An end section 108 of the return channel 40 extending from an inlet 52 of the casing 50 to the inlet 42 of the combustion chamber 28a and is embodied as a basically circular duct 110 extending in circumferential direction 62 around a burner arrangement 112, comprising a plurality of burners 64 (typically about 5 to 30). A sealing member 44 embodied as a partitioning wall 114 separates the duct 106 from the duct 110 and thus the bypass 34 from the return channel 40 to prevent a mixing of the O₂-rich and the O₂-lean working fluid 18, 20 in the combustion section 26a.

As can be seen in FIG 3, which shows schematically a top view of the gas turbine engine 12a, the gas turbine engine 12a comprises two silo combustors 54 embodied as side mounted silo combustors 54 and arranged symmetrically in respect to an axis 56. Moreover, the two side mounted silo combustors 54 are oriented slightly offset from a strictly perpendicular orientation in respect to the axis 56 as well as with a contrariwise bending in respect to each other and the axis 56. Note that the casing 50 of the combustion section 26a in FIG 3 has a slightly different shape in comparison to the exemplary shape of the casing 50 shown in FIG 2. Specifically, the casing 50 has two outlets 34 connecting the combustion section 26a to the unit for oxygen separation.

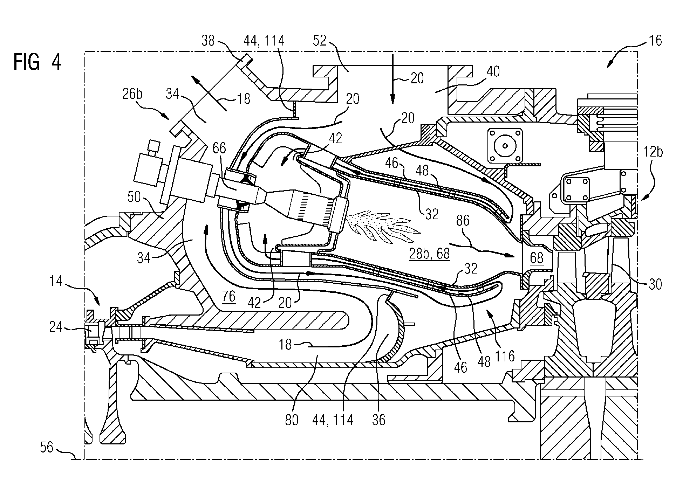

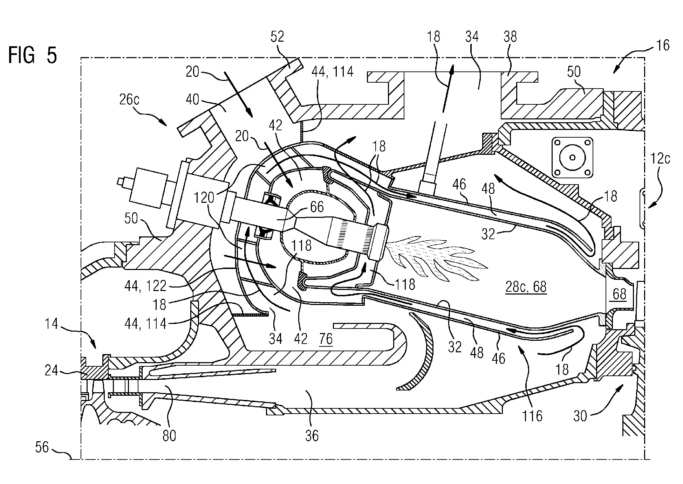

FIG 4 and 5 show sectional views of alternative gas turbine engines 12b, 12c both useable in a gas turbine engine unit 10 with the unit for the oxygen extraction process introduced in FIG 1. The embodiments from FIG 4 and 5 differ in regard to the embodiment according to FIG 1 in that in both embodiments the combustion section 26b, 26c is an inline combustion section 26b, 26c arranged axially between at least a compressor section 14 and a turbine section 16 of the gas turbine engine 12b, 12c and in the direction of a longitudinal or rotational axis 56 of the gas turbine engine 12b, 12c. The inline combustion section 26b, 26c comprises a combustion chamber 28b, 28c that is defined by a double wall can 116 or the combustion chamber 28b, 28ca comprises an outer wall 46 and an inner wall 32, respectively. A passage 48 is arranged between the outer wall 46 and the inner wall 32.

The embodiments from FIG 4 and 5 differ from one another in a flow path of the O₂-rich and O₂-lean working fluid 18, 20.

Referring now to FIG 4 the O₂-rich working fluid 18 discharged from a compressor 24 of the compressor section 14 enters the bypass 34 through outlet 36. After exiting the bypass 34 through outlet 38 in a casing 50 of the combustion section 26b the O₂-rich working fluid 18 travels a channel leading to a unit for oxygen extraction (not shown). The bypass 34 discharges the total amount of O₂-rich working fluid 18 from the compressor 24 of the compressor section 14 to the unit for the oxygen extraction process. In the unit for oxygen separation O₂ is extracted exemplarily by an ion transport membrane (not shown).

The now O₂-lean working fluid 20 is led back to the combustion section 26b via a return channel 40 extending from the extraction unit to an inlet 42 of the combustion chamber 28b. The return channel 40 extends through an inlet 52 of the casing 50 of the combustion section 26b. An end section of the return channel 40 is the passage 48, hence the passage 48 is a part of the return channel 40 in the combustion section 26b. Thus, the O₂-lean working fluid 20 travels along the passage 48 after entering the combustion section 26b coming from the extraction unit. While bypassing the combustion chamber 28b the O₂-lean working fluid 20 is heated and simultaneously cools the inner and outer wall 32, 46 of the combustion chamber 28b and thus the overall temperature in the combustion chamber 28b. After entering the combustion chamber 28b the O₂-lean working fluid 20 is burned with added fuel by a burner 66 of the combustion chamber 28b. Sealing members 44 embodied as partitioning walls 112 separate the bypass 34 from the return channel 40 in the combustion section 26b to prevent a mixing of the O₂-rich and the O₂-lean working fluid 18, 20.

A reversed flow path is shown in the embodiment of FIG 5. The O₂-rich working fluid 18 discharged from a compressor 24 of the compressor section 14 enters the bypass 34 through outlet 36. The bypass 34 comprises a duct 118 to allow the O₂-rich working fluid 18 to bridge the combustion chamber 28c. The passage 48 is a part of the bypass 34 in the combustion section 26c. Specifically, a portion of the O₂-rich working fluid 18 enters the duct 118 directly after exiting the outlet 36 and enters the passage 48 thereafter to bridge the combustion chamber 28c. Another part of the O₂-rich working fluid 18 enters the passage 48 first and subsequently the duct 118 before arriving at the outlet 38.

While bypassing the combustion chamber 28c the O₂-rich working fluid 18 is heated and simultaneously cools the inner wall 32 of the combustion chamber 28c and thus the overall temperature in the combustion chamber 28c. After flowing through the bypass 34 or the duct 118 and the passage 48 the O₂-rich working fluid 18 exits the combustion section 26c through an outlet 38 in a casing 50 of the combustion section 26c. Hence, the O₂-rich working fluid 18 travels along the passage 48 before exiting the combustion section 26c through the outlet 38. The bypass 34 discharges the total amount of O₂-rich working fluid 18 from the compressor 24 of the compressor section 14 to the unit for the oxygen extraction process.

After exiting the combustion section 26c the heated O₂-rich working fluid 18 travels a channel leading to the unit for oxygen extraction. There O₂ is extracted exemplarily by an ion transport membrane (not shown).

The now O₂-lean working fluid 20 is led back to the combustion section 26c via a return channel 40 extending from the extraction unit to an inlet 42 of the combustion chamber 28c and through an inlet 52 of the casing 50 of the combustion section 26c. To cross the duct 118 the combustion section 26c comprises through channels 120 connecting the return channel 40 and the inlet 42 of the combustion chamber 28c. After entering the combustion chamber 28c the O₂-lean working fluid 20 is burned with added fuel by a burner 66 of the combustion chamber 28c. Sealing members 44 embodied as partitioning walls 114 and an outer wall 122 of the duct 118 separate the bypass 34 from the return channel 40 in the combustion section 26c to prevent a mixing of the O₂-rich and the O₂-lean working fluid 18, 20.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

Although the invention is illustrated and described in detail by the preferred embodiments, the invention is not limited by the examples disclosed, and other variations can be derived therefrom by a person skilled in the art without departing from the scope of the invention.

## Claims

1. Method for operating a gas turbine engine unit (10) comprising a gas turbine engine (12, 12a, 12b, 12c) with at least a compressor section (14) and a turbine section (16), wherein the compressor section (14) and the turbine section (16) are operable by a working fluid (18, 20), and further comprising a unit (22) for an oxygen extraction process, wherein the method comprises the steps of:
- Discharging a total amount of O₂-rich working fluid (18) from a compressor (24) of the compressor section (14) to the unit (22) for the oxygen extraction process and
- Extracting O₂ from the O₂-rich working fluid (18) by an oxygen extraction process.

2. A method according to claim 1,
wherein the gas turbine engine (12, 12a, 12b, 12c) further comprises a combustion section (26, 26a, 26b, 26c) with at least a combustion chamber (28, 28a, 28b, 28c), and wherein the method further comprises the step(s) of:
- Feeding to the at least one combustion chamber (28, 28a, 28b, 28c) of the combustion section (26, 26a, 26b, 26c) an O₂-lean working fluid (20) resulting from the oxygen extraction process
and/or
- Burning an O₂-lean working fluid (20) resulting from the oxygen extraction process in the at least one combustion chamber (28, 28a, 28b, 28c) of the combustion section (26, 26a, 26b, 26c).

3. A method according to claim 1 or 2,
wherein the method further comprises the step of:
- Expanding the burnt O₂-lean working fluid (20) through a turbine (30) of the turbine section (16), particularly for producing electricity.

4. A method according to any preceding claim,
wherein the method further comprises the step(s) of:
- Cooling at least one wall (32, 46) of the at least one combustor chamber (28, 28a, 28b, 28c) of the combustor section (26, 26a, 26b, 26c) by the O₂-rich working fluid (18) or by the O₂-lean working fluid (20) while bypassing the at least one combustion chamber (28, 28a, 28b, 28c) and
- Heating the O₂-rich working fluid (18) or the O₂-lean working fluid (20) while bypassing the at least one combustion chamber (28, 28a, 28b, 28c).

5. A gas turbine engine unit (10) comprising a gas turbine engine (12, 12a, 12b, 12c) with at least a compressor section (14) and a turbine section (16), wherein the compressor section (14) and the turbine section (16) are operable by a working fluid (18, 20) and at least one bypass (34), and further comprising a unit (22) for an oxygen extraction process, wherein the at least one bypass (34) is embodied in such a way to discharge a total amount of O₂-rich working fluid (18) from a compressor (24) of the compressor section (14) to the unit (22) for the oxygen extraction process and wherein the unit (22) for the oxygen extraction process is embodied in such a way to extract O₂ from the O₂-rich working fluid (18).

6. A gas turbine engine unit according to claim 5, wherein the at least one bypass (34) extends from at least one outlet (36) of a compressor section (14) of the gas turbine engine (12, 12a, 12b, 12c) to at least one outlet (38) of the combustion section (26, 26a, 26b 26c) and/or wherein at least one outlet (38) of the combustion section (26, 26a, 26b, 26c) connects the combustion section (26, 26a, 26b, 26c) to the unit (22) for the oxygen extraction process.

7. A gas turbine engine unit according to claim 5 or 6, characterise by at least one return channel (40) extending from the unit (22) for the oxygen extraction process to at least one inlet (42) of the at least one combustion chamber (28, 28a, 28b, 28c) of the combustion section (26, 26a, 26b, 26c).

8. A gas turbine engine unit according to any one of claims 5 and 7, wherein the combustion section (26, 26a, 26b, 26c) comprises at least one sealing member (44) separating the at least one bypass (34) and the at least one return channel (40) from each other.

9. A gas turbine engine unit according to any one of claims 5 to 8, wherein the at least one combustion chamber (28b, 28c) comprises an outer wall (46), an inner wall (32) and a passage (48) arranged between the outer wall (46) and the inner wall (32), and/or wherein the O₂-rich working fluid (18) travels along the passage (48) after entering the combustion section (26b) from the unit (22) for the oxygen extraction process or an O₂-lean working fluid (20) travels along the passage (48) before exiting the combustion section (26c) through at least one outlet (38) of the combustion section (26c).

10. A gas turbine engine unit according to any one of claims 5 to 9, wherein the combustion section (26, 26a, 26b, 26c) comprises a casing (50) and/or wherein the casing (50) is provided with at least an inlet (52) and at least an outlet (38) to connect the combustion section (26, 26a, 26b, 26c) with the unit (22) for the oxygen extraction process.

11. A gas turbine engine unit according to any one of claims 5 to 10, wherein the combustion section (26b, 26c) is an inline combustion section (26b, 26c) arranged axially between at least the compressor section (14) and the turbine section (16) of the gas turbine engine (12b, 12c).

12. A gas turbine engine unit according to any one of claims 5 to 10, wherein the combustion section (26, 26a) comprises at least one single top mounted silo combustor (54, 54a), especially arranged basically perpendicular to an axis (56) of the gas turbine engine (12, 12a).

13. A gas turbine engine unit according to claim 14, wherein the combustion section (26, 26a) and/or the single top mounted silo combustor (54, 54a) comprises a first cavity (58) and at least a second cavity (60), wherein the first cavity (58) is the combustion chamber (28, 28a) and the at least second cavity (60) extends in at least one direction (62) all around an outer contour (64) of the first cavity (58) to build the at least one bypass (34) for discharging the O₂-rich working fluid (18).

14. A gas turbine engine unit according to any one of claims 5 to 13, wherein the combustion section (26, 26a, 26b, 26c) comprises at least one burner (66) that is selected for combustion of an O₂-lean working fluid (20) and/or wherein the combustion section (26, 26a, 26b, 26c) comprises a combustor volume (68) that has a residence time that is between 20 milliseconds (ms) and 200 ms.

15. A gas turbine engine unit according to any one of claims 5 to 14, wherein the unit (22) for the oxygen extraction process comprises at least one ion transport membrane (70) to perform the oxygen extraction process.
